# EUROPEAN PATENT APPLICATION

(11) **EP 2 854 308 A1**
(43) Date of publication of application: **01.04.2015**
(21) Application number: 14175368.1
(22) Date of filing: 02.07.2014
(51) Int. Cl.: H04B 10/114, G08C 23/04, H04B 10/116

(54) **Optical monitoring unit for room surveillance**

(71) Applicant: Siemens Schweiz AG, 8047 Zürich (CH)
(72) Inventor: Frey, Christian, 6314 Unterägeri (CH)
(74) Representative: Maier, Daniel Oliver

(57) **Abstract**

A monitoring unit (1) comprising a optical receiver (2),
a receiver controller (3) configured to communicate with the optical receiver (2), a communication controller (4) configured to communicate with the receiver controller (3), wherein the optical receiver (2) is configured to receive signals in the form of light transients from an emitter (5) of transient light signals, and wherein the receiver controller (3) is configured to convert the signals into digital values at a sample rate that allows for processing of light transients whose durations are less than or equal to 40 milliseconds, preferably are less than or equal to 20 milliseconds, yet more preferably are less than or equal to 10 milliseconds.

## Description

### Background

The present disclosure relates to an improved room and/or surveillance unit. The present disclosure focuses on the use of visible light communication in room and/or surveillance units. In doing so, the room and/or surveillance unit according to the present disclosure makes use of a video device, generally of an optical receiver, of a room and/or surveillance unit in conjunction with visible light communications.

Room units in commercial, industrial, and/or residential buildings generally function to optimise comfort inside these buildings. To that end, room units monitor temperature, light intensity, humidity, volatile organic compounds etc. Contemporary room units also provide presence detection. The data measured by a room unit may then be processed by a building management system to provide optimum heating, ventilation, and air conditioning.

Room units may also detect hazards such as fire and/or detect burglary. Room units configured to detect fire hazards differ from comfort units in that reliability becomes paramount. Financial and technical constraints may, for instance, motivate a building manager to balance the conflicting requirements of optimum comfort and of contingencies in the power grid. In contrast to optimum comfort, stringent criteria apply to room units for safety purposes. A room unit for safety purposes shall detect as many hazards as possible (minimal type I errors). At the same time, false alarms (type II errors) must be avoided.

To distinguish between a fire hazard and a false alarm, a room unit may rely on the support provided by an operator. To that end, a room unit may provide a video module. Typically, such a room unit would also be connected to a communication bus in order to transfer a video stream over the bus to an operator sitting in a control room. An operator may thus remotely inspect a site through the video module of a room unit. Through remote inspection, the operator may then decide on whether there actually is a hazard and consequently confirm or cancel an alarm.

Indoor and/or outdoor surveillance units generally function to secure commercial, industrial, and/or residential premises.

The communication bus of a room and/or surveillance unit with a video module needs to provide sufficient bandwidth, so that the bus allows for streaming video data in real time. Typically, wireless solutions such as WLAN, KNX® RF, and/or Enocean® are employed for the purpose of video streaming. Hard-wired solutions are also on the market. These frequently rely on Ethernet® cables or on KNX® cables.

Room and/or surveillance units for comfort functions may also provide video modules. A video module of a room and/or surveillance unit may, for instance, support an operator in judging whether there are people present in a particular room of a building. The temperature in that particular room may, for instance, be lowered should the outcome of presence detection be negative.

Video modules that are state of the art come as charge-coupled devices. They provide a plurality of capacitors that are photoactive. When an image is projected on the capacitors of a charge-coupled device, each capacitor will accumulate an electric charge that is proportional to the intensity of light at its location. A control circuit then sequentially measures the electric charge of each capacitor and stores a digital representation of the measured values in a memory. Video modules for visible light can repeat the cycle of charge accumulation, charge measurement and conversion into a digital representation many times per second. Actually, charge-coupled devices can record light fluctuations that are too short to be registered by the human eye.

Presence detection through video modules can be done through an operator or can be automated through an expert system. Where presence detection is automated, the system needs to distinguish between ordinary staff or residents on the one hand and security guards or cleaners on the other hand. An intrusion alarm, for instance, should not go off due to a security guard patrolling the premises. Consequently, room and/or surveillance units with video modules frequently require an override switch. The override switch then serves to deactivate the intrusion detection system while the security guard is on patrol. Likewise, the fire detector of a room and/or surveillance unit may provide an override switch to deactivate the detector during a fire drill.

The aim of the present disclosure is to at least mitigate the aforementioned difficulties and to provide an advanced room and/or surveillance unit that meets the aforementioned requirements.

### Summary

The present disclosure is based on the discovery that a technique known as visible light communication can be used to provide an override function for room and/or surveillance units. To that end, a room and/or surveillance unit provides a video module and the video module is configured to detect fast transients in light intensity. Those transients typically last for periods that are too short to be registered by a human observer.

The present disclosure also relates to a light emitter that functions to send transient light signals to a video module of a room and/or surveillance unit. The light emitter is preferably a portable device that can be carried out a security guard. The light emitter may also be the screen of a mobile phone. The screen of the mobile phone is in this case configured to emit transient light signals that are too short to be registered by a human observer.

The above problems are resolved by a room and/or surveillance unit and by a method for operating a room and/or surveillance unit according to the independent claims of this disclosure. Preferred embodiments of the present disclosure are covered by dependent claims.

It is a related object of the present disclosure to provide a room and/or surveillance unit with a video module that is configured to detect fast transients of visible light.

It is another related object of the present disclosure to provide a room and/or surveillance unit with a video module that is configured to detect fast transients of infrared light.

It is yet another object of the present disclosure to provide a room and/or surveillance unit with a video module that is configured to detect transients of light intensity with durations of less than 40 milliseconds.

It is yet another object of the present disclosure to provide a room and/or surveillance unit with a video module that is configured to detect transients of light intensity with durations of less than 20 milliseconds.

It is yet another object of the present disclosure to provide a room and/or surveillance unit with a video module that is configured to detect transients of light intensity with durations of less than 10 milliseconds.

It is yet another object of the present disclosure to provide a room and/or surveillance unit with a video module that is configured to detect transients of light intensity with durations of less than 5 milliseconds.

It is yet another object of the present disclosure to provide a room and/or surveillance unit with a video module that is configured to detect transients of light intensity with durations of less than 2 milliseconds.

It is yet another object of the present disclosure to provide a room and/or surveillance unit with a video module that is configured to detect transients of light intensity with durations of less than 1 millisecond.

It is another object of the present disclosure to provide a room and/or surveillance unit with a video module wherein the video module is employed for the two purposes of surveillance and of visible light communication.

It is another object of the present disclosure to provide a room and/or surveillance unit with a video module wherein the video module is a charge-coupled device.

It is also an object of the present disclosure to provide a room and/or surveillance unit that provides safety functionality.

It is a related object of the present disclosure to provide a room and/or surveillance unit configured for fire detection.

It is also another object of the present disclosure to provide a room and/or surveillance unit configured for intrusion detection.

It is also an object of the present disclosure to provide a room and/or surveillance unit that provides comfort functionality.

It is also an object of the present disclosure to provide a building with a room and/or surveillance unit according to this disclosure.

### Brief description of the drawings

Various features will become apparent to those skilled in the art from the following detailed description of the disclosed non-limiting embodiments. The drawings that accompany the detailed description can be briefly described as follows:
FIG 1 is a block diagram providing a general overview of the components of a room and/or surveillance unit according to this disclosure.
FIG 2 gives an example of a room and/or surveillance unit in use.

### Detailed description

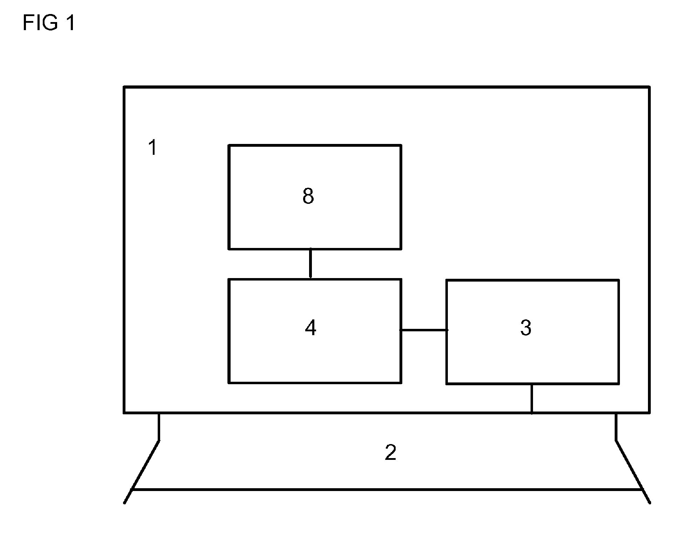

The various components of a room and/or surveillance unit 1 according to this disclosure are shown on FIG 1. The room and/or surveillance unit 1 comprises at least one video device 2. In a preferred embodiment, the video device 2 is a charge-coupled device.

The video device 2 is preferably sensitive to visible light with wavelengths from 400 nanometers to 800 nanometers. According to another embodiment, the video device 2 detects infrared light with wavelengths higher than 700 nanometers, yet more preferably detects wavelengths above 780 nanometers, yet more preferably detects wavelengths between 850 nanometers and 900 nanometers. It seems worth noting that the ranges of the wavelengths of visible and of infrared light may overlap to some extent.

A video controller, generally a receiver controller, 3 connects to the video device 2. The video controller 3 is an electronic circuit and processes signals obtained from the video device 2. In a preferred embodiment, the electronic circuit of the video controller 3 is programmable.

In conjunction with a charge-coupled device, the video controller 3 sequentially converts the charges on each capacitor of the video device 2 into digital representations. An array of measured values is thus obtained and this array is stored into a memory. The memory may be any volatile or non-volatile memory such as a dynamic random access memory, a magnetic random access memory, flash cells, a hard disc, a millipede storage device or similar.

The connection in between the video device 2 and the video controller 3 may be a parallel and/or a serial bus. In case of a parallel connection, the controller 3 takes one cycle to read a plurality of charge values from the video device 2. In case of a serial connection, the controller 3 reads one charge value from the video device 2 at a time.

The array of charge values is then analysed by a communication controller 4. The communication controller 4 is an electronic circuit and processes data obtained from the video controller 3. In a preferred embodiment, the electronic circuit of the communication controller 4 is programmable. The same consideration as above applies in regard to the connection between the video controller 3 and the communication controller 4.

The communication controller 4 picks up communication signals from the time series of video data. In a first step, the communication controller 4 discovers communication signals within the time series of video data, if any. If a communication signal is discovered within the time series of video data, a potential communication partner will be within reach of the room and/or surveillance unit 1.

In the context of this disclosure, communication signals are generally light transients with short durations. Short durations mean that these transients last for periods that are generally too short to be registered by a human observer. Typical transients last less than 40 milliseconds, preferably less than 20 milliseconds, yet more preferably less than 10 milliseconds. Still more preferable transients last less than 5 milliseconds, or even less than 2 milliseconds, in some cases less than 1 millisecond.

The duration of a transient typically starts when the amplitude or intensity of a light pulse reaches half its peak value. Similarly, the transient ends when the amplitude or the intensity of a light pulse drops below half its peak value. It seems worth stressing that the duration of a light transient can also be determined based on (pre-defined) threshold values of amplitude or intensity or based on other criteria known to those skilled in the art.

The sample rates of the video controller 2 and of the video device 1 generally need to be above the Nyquist frequency. If transients with durations of 40 milliseconds are to be detected, then the sample rate will be higher than the inverse of half the duration of the transient. That is, a transient of 40 milliseconds will result in a sample rate above 50 Hz.

In a second step, the communications controller 4 will try and establish an at least unidirectional communication link with the communication partner. In a preferred embodiment, the communication path will be bi-directional. Further, the communication path needs be sufficiently reliable in order to exchange data.

In case of a bidirectional link, the roles of primary and of secondary devices may be negotiated between the room and/or surveillance unit 1 and its communication partner. This process corresponds to a third step of setting up a data link. The primary device of a link typically controls the secondary device. Should the room and/or surveillance unit 1 play the role of the primary device, then the room and/or surveillance unit 1 with its communication controller 4 will control the communication partner. In this case, the communication partner may only be allowed to send data when requested by the room and/or surveillance unit 1 and its controller 4.

In a fourth step, the room and/or surveillance unit 1 and its communication partner may negotiate quality of service parameters. Quality of service involves issues such as bit errors. Moisture or dust may, for instance, obstruct the light path between the communication partners such that the receiving end misinterprets a bit. The receiving end will then register a 0 bit instead of a 1 bit or vice versa. Further, nearby sources of light may involve transients and interfere with the communication between the two partners.

The communication controller 4 may also connect to the room and/or surveillance unit controller 8. On the physical level, the communication controller 4 and the room and/or surveillance unit controller 8 may actually be embedded on the same microcontroller or central processing unit. Actually, the video controller (3) may be arranged on the same microcontroller or central processing unit together with the communication controller 4 and the room and/or surveillance unit controller 8. The room and/or surveillance unit controller 8 links the data picked up by the communication controller 4 to their purpose. In other words, the room and/or surveillance unit controller 8 decides on what to do with the data picked up by the communication controller 4. The room and/or surveillance unit controller 8 may, for instance, identify an operator, locate an operator and/or communicate a low battery status to an operator. The same consideration as above applies in regard to the connection between the room and/or surveillance unit controller 8 and the communication controller 4.

In a particular embodiment, the room and/or surveillance unit controller 8 also controls other aspects of the room and/or surveillance unit 1. The room and/or surveillance unit controller 8 may, for instance, trigger an alarm when a fire is detected. The room controller 8 may also handle KNX®, Enocean® and/or other data connections that connect the room and/or surveillance unit 1 to a control room.

In an alternate embodiment, no bi-directional link is required. Instead, the room and/or surveillance unit 1 receives a beacon signal from its communication partner. By sending a beacon signal, the communication partner indicates proximity and preferably also readiness to establish a (bi-directional) link with the room and/or surveillance unit 1. In a typical embodiment, the beacon signal also carries parameters such as an identifier of the sender. The sender device may also be programmable such that the beacon signal carries an operator's or a security guard's identity. In a particular embodiment, a room and/or surveillance unit may be operative to suppress an alarm and/or to suppress any follow-up action after a security guard and/or an operator has been identified.

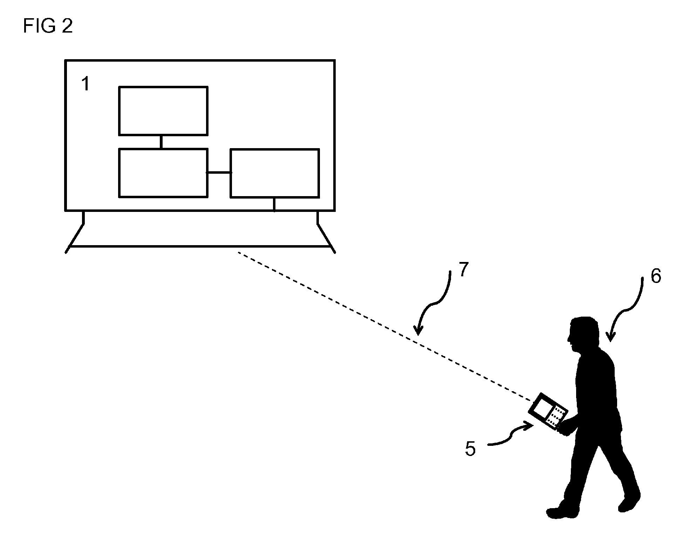

FIG 2 shows a room and/or surveillance unit 1 in use with a sender 5. The sender 5 is carried by an operator 6 and may be a portable device such as a mobile phone, a tablet computer or a portable transponder. In a particular embodiment, the sender 5 is configured to also receive signals from a room and/or surveillance unit 1.

The sender 5 connects to the room and/or surveillance unit 1 via a wireless link 7. The wireless link 7 may rely on visible light and/or on infrared light. The same considerations as above apply in regards to durations of transient signals, sampling rates, wavelengths etc.

In doing so, a beacon signal may function to identify an operator 6 before a room and/or surveillance unit 1. Further, a beacon signal may be employed to locate a communication partner 5, 6.

The sender 5 typically comprises a controller and a light source. The controller is connected to the light source such that the controller may command the light source to send a light transient. The light source typically is configured to emit light transients with the aforementioned durations.

With the sender 5 also configured as a receiver, the sender/receiver 5 typically also comprises a light receiver such as a photodiode. The photodiode is configured to receive light transients with the aforementioned durations. The sender/receiver 5 will then also comprise a receiver controller whose function is similar to the function of the video controller 3 of the room and/or surveillance unit 1. Further, the sender/receiver 5 will then also comprise a communication controller whose function corresponds to the communication controller 4 of the room and/or surveillance unit 1.

In another embodiment, a room and/or surveillance unit 1 may send a beacon signal to indicate the room and/or surveillance unit needs maintenance, repair and/or new batteries.

Any steps of a method according to the present application may be embodied in hardware, in a software module executed by a processor, or in a combination of the two. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing from the spirit and the scope of the invention as defined by the following claims. It should also be understood that the invention is not restricted to the illustrated embodiments and that various modifications can be made within the scope of the following claims.

### Reference numerals

- 1: room and/or surveillance unit, generally a monitoring unit
- 2: video device, generally an optical receiver
- 3: video controller, generally a receiver controller
- 4: communication controller
- 5: sender/receiver
- 6: operator/security guard
- 7: communication link
- 8: room and/or surveillance unit controller, generally a monitoring unit controller

## Claims

1. A monitoring unit (1) comprising
a optical receiver (2),
a receiver controller (3) configured to communicate with the optical receiver (2),
a communication controller (4) configured to communicate with the receiver controller (3),
wherein the optical receiver (2) is configured to receive signals in the form of light transients from an emitter (5) of transient light signals,
and wherein the receiver controller (3) is configured to convert the signals received from the optical receiver (2) into digital values at a sample rate that allows for processing of light transients whose durations are less than or equal to 40 milliseconds, preferably are less than or equal to 20 milliseconds, yet more preferably are less than or equal to 10 milliseconds.

2. The monitoring unit (1) according to claim 1, wherein
the receiver controller (3) is configured to send time series of digital data to the communication controller (4),
and wherein the communication controller (4) is configured to analyse the data received from the receiver controller (3),
such that the communication controller (4) discovers communication signals amongst the data received from the receiver controller (3).

3. The monitoring unit (1) according to claim 2, wherein the communication controller (4) is configured to analyse data received from the receiver controller (3) and to discover communication signals amongst the data received from the receiver controller (3) at sample rates that are sufficient to allow for processing of communication signals originating from light transients whose durations are less than or equal to 40 milliseconds, preferably are less than or equal to 20 milliseconds, yet more preferably are less than or equal to 10 milliseconds.

4. The monitoring unit (1) according to claims 1 or 2, wherein the receiver controller (3) is configured to convert the signals from the optical receiver (2) into digital values at a sample rate that allows for processing of light transients whose durations are less than or equal to 5 milliseconds, preferably are less than or equal to 2 milliseconds, yet more preferably are less than or equal to 1 millisecond.

5. The monitoring unit (1) according to claim 3, wherein the communication controller (4) is configured to analyse data received from the receiver controller (3) and to discover communication signals amongst the data received from the receiver controller (3) at sample rates that are sufficient to allow for processing of communication signals originating from light transients whose durations are less than or equal to 5 milliseconds, preferably are less than or equal to 2 milliseconds, yet more preferably are less than or equal to 1 millisecond.

6. The monitoring unit (1) according to any of the claims 1 to 5, wherein the receiver controller (3) and the communication controller (4) or the communication controller (4) and the monitoring unit controller (8) are arranged on the same microcontroller or central processing unit.

7. The monitoring unit (1) according to any of the claims 1 to 6, wherein the receiver controller (3) and the monitoring unit controller (8) or the communication controller (4) and the monitoring unit controller (8) are arranged on the same microcontroller or central processing unit.

8. The monitoring unit (1) according to any of the claims 1 to 7, wherein the communication controller (4) is configured to send data to the monitoring unit controller (8) and wherein the monitoring unit controller (8) is configured to further process these data.

9. The monitoring unit (1) according to any of the claims 1 to 8, wherein the monitoring unit controller (8) is configured to handle a data connection between the monitoring unit (1) and a control room and/or between the monitoring unit (1) another monitoring unit.

10. The monitoring unit (1) according to any of the claims 1 to 8, wherein the monitoring unit controller (8) is configured to trigger an alarm such as a fire alarm or an intrusion alarm.

11. A monitoring unit (1) according to any of the claims 1 to 10, wherein the communication controller (4) is configured to establish a unidirectional connection to an emitter (5) of transient light signals.

12. A monitoring unit (1) according to any of the claims 1 to 10, wherein the communication controller (4) is configured to establish a bidirectional connection to an emitter (5) of transient light signals.

13. A building with a monitoring unit (1) according to any of the previous claims.

14. A method for operating a monitoring unit (1), the method comprising
receiving an image through a optical receiver (2),
a receiver controller (3) converting the signals received by the optical receiver (2) into digital representations,
the receiver controller (3) delivering data to a communication controller (4),
wherein the receiver controller (3) converts the signals from the optical receiver (2) into digital values at a sample rate that allows for processing of light transients with durations of less than or equal to 40 milliseconds, preferably of less than or equal to 20 milliseconds, yet more preferably of less than or equal to 10 milliseconds, even more preferably of less than or equal to 5 milliseconds, still more preferably of less than or equal to 2 milliseconds, still more preferably of less than or equal to 1 millisecond.

15. An emitter (5) comprising
a controller and a light source,
wherein the controller commands the light source,
wherein the light source is configured to emit light transients with durations of less than or equal to 40 milliseconds, preferably of less than or equal to 20 milliseconds, yet more preferably of less than or equal to 10 milliseconds, even more preferably of less than or equal to 5 milliseconds, still more preferably of less than or equal to 2 milliseconds, still more preferably of less than or equal to 1 millisecond,
such that the light transients may be received and may be processed by a monitoring unit according to claim 1.
